(19) Europäisches Patentamt
European Patent Office
Office européen des brevets

(11) **EP 3 817 201 B1**

(12) **FASCICULE DE BREVET EUROPEEN**

(45) Date de publication et mention
de la délivrance du brevet:
**17.04.2024 Bulletin 2024/16**

(21) Numéro de dépôt: **20205175.1**

(22) Date de dépôt: **02.11.2020**

(51) Classification Internationale des Brevets (IPC):
**H02K 7/11** *(2006.01)* **H02K 9/06** *(2006.01)*
**H02K 49/10** *(2006.01)* **H02K 9/14** *(2006.01)*

(52) Classification Coopérative des Brevets (CPC):
**H02K 7/11; H02K 9/14; H02K 49/102**

(54) **MOTEUR ÉLECTRIQUE DE TRACTION D'UN VÉHICULE**

ELEKTROFAHRMOOTOR FÜR EIN FAHRZEUG

ELECTRIC TRACTION MOTOR FOR A VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.11.2019 FR 1912346**

(43) Date de publication de la demande:
**05.05.2021 Bulletin 2021/18**

(73) Titulaire: **ALSTOM Holdings
93400 Saint-Ouen-sur-Seine (FR)**

(72) Inventeur: **BOUALEM, Benali
25660 SAONE (FR)**

(74) Mandataire: **Lavoix
2, place d'Estienne d'Orves
75441 Paris Cedex 09 (FR)**

(56) Documents cités:
EP-A2- 0 930 692 WO-A1-96/37035
WO-A1-2012/093670 CN-A- 109 415 070
JP-A- 2013 211 949 US-B1- 6 661 144

- **NEVES CARLOS G C ET AL: "Magnetic gear: A review", 2014 11TH IEEE/IAS INTERNATIONAL CONFERENCE ON INDUSTRY APPLICATIONS, IEEE, 7 décembre 2014 (2014-12-07), pages 1-6, XP032746716, DOI: 10.1109/INDUSCON.2014.7059417**
- **A MATTHEE ET AL: "A high performance concentric magnetic gear", PROC. OF THE SOUTHERN AFRICAN UNIVERSITIES POWER ENGINEERING CONFERENCE, 1 janvier 2015 (2015-01-01), pages 203-207, XP055707161, DOI: 10.13140/RG.2.1.1493.6167**
- **GERBER S ET AL: "Analysis of the end-effects in magnetic gears and magnetically geared machines", 2014 INTERNATIONAL CONFERENCE ON ELECTRICAL MACHINES (ICEM), IEEE, 2 septembre 2014 (2014-09-02), pages 396-402, XP032687640, DOI: 10.1109/ICELMACH.2014.6960211**

**Description**

La présente invention concerne un moteur électrique de traction d'un véhicule, ainsi qu'un véhicule ferroviaire comprenant un tel moteur.

L'invention se rapporte au domaine des véhicules à traction électrique ou hybride, en particulier aux véhicules ferroviaires à traction électrique, tels qu'un train, un tramway ou un métro.

JP2013211949A décrit un moteur électrique avec un réducteur magnétique transmettant le mouvement d'un arbre tournant à un ventilateur externe.

US6661144B1 décrit un moteur électrique auto-ventilé, avec un limiteur de vitesse électromagnétique à glissement, prévu entre une roue de ventilation et un arbre moteur.

CN109415070A décrit une unité d'actionnement pour un véhicule tracteur, comprenant un moteur électrique haute vitesse alimenté par un convertisseur électronique de puissance, une boîte de vitesses, et un accouplement mécanique accouplé à une roue ou à un ensemble de roues.

Il est connu de réaliser un train dont la propulsion est assurée par plusieurs moteurs électriques autoventilés. Chaque moteur électrique comprend un rotor et un stator, ainsi qu'un ventilateur fixé à l'extrémité d'un arbre du rotor. Lorsque le rotor est en rotation par rapport au stator, le ventilateur ventile donc le moteur pour le refroidir. Cela permet d'assurer que, lorsque le moteur est en fonctionnement, il est nécessairement ventilé, en assurant sa propre ventilation, l'hélice de ventilation étant directement actionnée par le rotor. On prévoit par exemple que les moteurs sont des moteurs asynchrones d'une puissance nominale d'environ 450kW (kilowatts). Les moteurs asynchrones sont généralement conçus pour atteindre une vitesse maximale de rotation du rotor d'environ 4500 tours par minute. Dès lors, un moteur de ce type est susceptible de peser, par exemple, environ 700 kg (kilogrammes).

Dans un souci d'efficacité énergétique, on prévoit d'équiper les nouveaux trains de moteurs dont la vitesse de rotation est plus élevée, afin d'obtenir un meilleur rapport puissance/masse. Par exemple, un moteur asynchrone d'une puissance nominale d'environ 450kW et conçu pour atteindre une vitesse maximale de 10 000 tours par minute peut peser environ 400 kg, soit une réduction de masse d'environ 300kg, à puissance égale, par rapport aux moteurs prévus pour fonctionner à 4500 tours par minute.

Il est nécessaire de prévoir un moyen de ventilation de ces moteurs à vitesse élevée. Toutefois, du fait de la vitesse de rotation élevée, prévoir une hélice de ventilation fixée sur le rotor génère un bruit important durant l'utilisation. Par ailleurs, prévoir des moyens de ventilation mécaniquement indépendants du rotor est plus complexe et ne permet pas de garantir que la ventilation est nécessairement effectuée lorsque le rotor tourne.

L'invention vise à résoudre notamment les inconvénients susmentionnés de l'art antérieur et à proposer un nouveau moteur électrique de traction d'un véhicule qui, tout en étant autoventilé, est particulièrement silencieux lorsque son rotor tourne à haute vitesse.

L'objet de l'invention est défini à la revendication 1.

Une idée à la base de l'invention est d'assujettir la rotation du ventilateur à celle du rotor par l'intermédiaire du réducteur magnétique, pour obtenir une autoventilation du moteur par le ventilateur, le ventilateur tournant à une vitesse moins élevée que celle du rotor. Le bruit du moteur à haute vitesse de rotation du rotor est donc réduit. Le réducteur magnétique est lui-même silencieux, notamment en comparaison avec un réducteur mécanique à train d'engrenages. De plus, le réducteur magnétique présente un rendement mécanique élevé, est facile à adapter sur les moteurs existants et est facile à entretenir, en ce qu'il ne nécessite notamment pas de lubrification.

Selon d'autres caractéristiques avantageuses de l'invention, prises isolément ou en combinaison :

- le réducteur magnétique est construit de sorte que les grandeurs p1, n2 et p3 vérifient la relation suivante :

$$[Math\ 1]\ n2 = p1 + p3.$$

- la couronne extérieure est la couronne entraînante, qui est fixe par rapport au ventilateur ; la couronne intermédiaire est la couronne statorique, qui est fixe par rapport au stator ; et le rapport de réduction s'écrit

$$[Math\ 4]\ R = \frac{w5}{w3} = -k$$

avec $[Math\ 2]\ k = \frac{p1}{(p1-n2)} = -\frac{p1}{p3}$ .

- la couronne extérieure est la couronne statorique, qui est fixe par rapport au stator ; la couronne intermédiaire est la couronne entraînante, qui est fixe par rapport au ventilateur ; et le rapport de réduction s'écrit

$$[Math\ 3]\ R = \frac{w5}{w3} = -\frac{k}{(1-k)}$$

avec

$$[Math\ 2]\ k = \frac{p1}{(p1-n2)} = -\frac{p1}{p3}.$$

- le rotor comprend un arbre rotorique, qui est coaxial avec l'axe principal, qui est en rotation à la vitesse w3 lorsque le rotor tourne à la vitesse w3, et qui supporte le ventilateur par l'intermédiaire d'un palier à roulements, le ventilateur étant rotatif par rapport au rotor autour de l'axe principal.

L'invention a également pour objet un véhicule ferroviaire comprenant un moteur tel que défini ci-avant, le moteur assurant la traction du véhicule ferroviaire.

L'invention sera mieux comprise à la lecture de la description suivante, donnée uniquement à titre d'exemple non limitatif et faite en référence aux dessins annexés sur lesquels :

[Fig 1] la figure 1 est une coupe longitudinale partielle schématique d'un moteur électrique selon un premier mode de réalisation, qui est donné à titre illustratif mais qui ne correspond pas à l'invention ;
[Fig 2] la figure 2 est une coupe longitudinale partielle schématique d'un moteur électrique selon un deuxième mode de réalisation, qui est donné à titre illustratif mais qui ne correspond pas à l'invention ;
[Fig 3] la figure 3 est une coupe longitudinale partielle schématique d'un moteur électrique selon un troisième mode de réalisation conforme à l'invention ;
[Fig 4] la figure 4 est une coupe longitudinale partielle schématique d'un moteur électrique selon un quatrième mode de réalisation conforme à l'invention ; et
[Fig 5] la figure 5 est une vue de face schématique d'un réducteur magnétique susceptible d'équiper les moteurs électriques des figures précédentes.

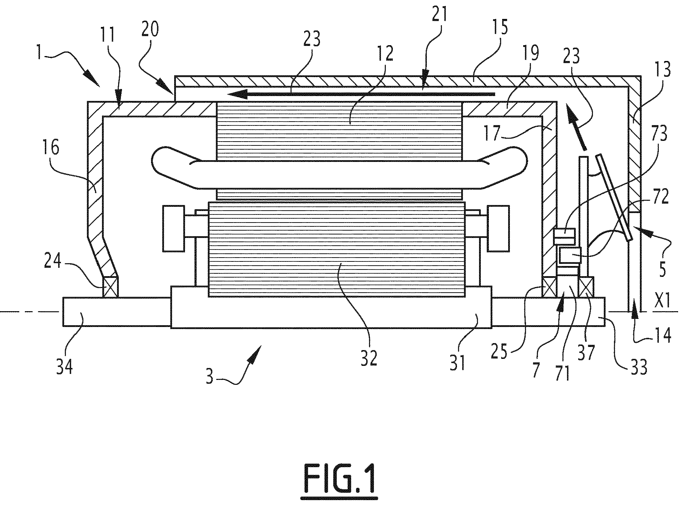

Pour le premier mode de réalisation, la figure 1 illustre un moteur électrique de traction d'un véhicule, c'est-à-dire un moteur qui actionne, seul ou en coopération avec d'autres moteurs, le roulage du véhicule.

Le véhicule concerné est préférentiellement un véhicule ferroviaire, comprenant un ou plusieurs moteurs tels que celui illustré sur la figure 1. Le véhicule ferroviaire peut être un train, tel qu'un train à grande vitesse, ou alors être un tramway ou un métro. En variante, le moteur peut être utilisé pour un véhicule non ferroviaire, par exemple un véhicule routier.

Le moteur électrique comprend essentiellement un stator 1, un rotor 3, un ventilateur 5 et un réducteur magnétique 7. Sur la figure 1, ces éléments sont partiellement représentés. Le moteur définit un axe principal X1, qui est fixe par rapport au stator 1.

Le stator 1 est une partie fixe du moteur, qui est prévue pour être rattachée au châssis du véhicule. Le rotor 3 est prévu pour être mécaniquement lié à des roues du véhicule afin d'entraîner leur rotation aux fins du roulage du véhicule.

Le stator 1 comprend un boîtier 11, traversé par l'axe X1, et un bobinage statorique 12, reçu entièrement à l'intérieur du boîtier 11, et présentant avantageusement une forme annulaire coaxiale avec l'axe X1. Le bobinage statorique 12 constitue ici un inducteur du moteur. C'est par l'intermédiaire du boîtier 11 que le stator 1 est attaché au châssis du véhicule.

Par exemple, le boîtier 11 comprend une paroi arrière 16, traversée par l'axe X1. La paroi 16 comporte optionnellement une ouverture centrée sur l'axe X1. Le boîtier 11 comprend avantageusement une paroi avant 17, traversée par l'axe X1 et présentant une ouverture centrée sur l'axe X1. Le boîtier 11 comprend avantageusement une paroi périphérique 19, de forme annulaire, coaxiale avec l'axe X1, reliant la paroi avant 17 à la paroi arrière 16 pour fermer le boîtier 11.

Le stator 1 comprend préférentiellement un flasque 13, disposé à l'extérieur du boîtier 11, avantageusement du côté de la paroi avant 17. Le flasque 13 présente par exemple une forme annulaire coaxiale avec l'axe X1, ici une forme de couronne, de façon à ménager une ouverture 14 de circulation d'air de ventilation 23. L'ouverture 14 est avantageusement centrée sur, et traversée par, l'axe X1.

Le stator 1 comprend préférentiellement une jupe 15, de forme annulaire coaxiale avec l'axe X1, qui s'étend en direction de la paroi arrière 16 à partir du flasque 13.

De préférence, le flasque 13 et, si elle est prévue, la jupe 15, sont fixement attachés au boîtier 11, tout en étant maintenus à distance des parois 17 et 19, par tout moyen approprié, incluant par exemple des pattes de fixation. Une paroi externe du stator 1, formée par le flasque 13 et la jupe 15, et une paroi interne du stator 1, formée par les parois 17 et 19 du boîtier 11, forment avantageusement une double peau et ménagent entre elles un conduit annulaire 21, débutant à l'ouverture 14 et se terminant à une ouverture annulaire 20 formée à l'extrémité opposée de la jupe 15 autour de la paroi 19. Durant l'utilisation, de l'air de ventilation circule à l'intérieur du conduit annulaire 21 selon les flèches 23, depuis l'ouverture 14 jusqu'à l'ouverture 20, pour ventiler le moteur, en particulier pour ventiler le contenu du boîtier 11, notamment le bobinage statorique 12. L'ouverture 14 est ici une ouverture d'admission d'air, alors que l'ouverture 20 est une ouverture de refoulement d'air.

Le rotor 3 est rotatif par rapport au stator 1 autour de l'axe X1.

De préférence, le rotor 3 comprend un arbre rotorique 31, qui est coaxial avec l'axe X1.

Le rotor 3 traverse avantageusement le boîtier 11 le long de l'axe X1, en ce que l'arbre rotorique 31 traverse le boîtier 11, en traversant au moins l'ouverture formée par la paroi 17. Une extrémité axiale 33 de l'arbre 31 émerge donc hors du boîtier 11 au travers de la paroi 17. De préférence, l'extrémité 33 ne s'étend pas par-delà le flasque 13.

Ici, l'arbre 31 traverse également l'ouverture formée par la paroi 16. Une extrémité axiale 34 de l'arbre 31 émerge donc hors du boîtier 11 au travers de la paroi 16.

L'arbre rotorique 31 est supporté par le boîtier 11, de façon à être rotatif par rapport au boîtier 11 autour de l'axe X1. Pour cela, par exemple, l'ouverture de la paroi 17 comporte un palier à éléments roulants 25 centré sur l'axe X1. Si l'arbre 31 traverse aussi la paroi 16, notamment au travers de l'ouverture susmentionnée de ladite paroi 16, ladite ouverture comportant alors également un palier à éléments roulants 24, centré sur l'axe X1. Chaque palier 24 et 25 supporte l'arbre 31 par rapport au boîtier 11 tout en autorisant la rotation autour de l'axe X1. C'est par l'intermédiaire de l'arbre 31 que le rotor actionne la rotation des roues du véhicule.

Selon le type du moteur, le rotor 3 comprend un aimant permanent rotorique 32, un bobinage rotorique, ou une cage rotorique, qui est fixe par rapport à l'arbre 31 en étant monté autour de l'arbre 31. L'aimant permanent rotorique 32, le bobinage rotorique ou la cage rotorique constitue l'induit du moteur. Ici, le moteur est préférentiellement un moteur à aimant permanent, de sorte que l'induit rotorique est un aimant permanent rotorique. De préférence, on choisit un moteur synchrone à aimant permanent. En variante, on pourrait choisir un moteur asynchrone, ou d'autres types de moteurs électriques.

L'induit 32 est disposé entièrement à l'intérieur du boîtier 11, en étant centré sur l'axe X1, et en étant radialement entouré par le bobinage statorique 12. Lorsque l'on effectue une alimentation du moteur en énergie électrique, le bobinage statorique 12 est alimenté en énergie électrique, ce qui induit une rotation de l'induit rotorique 32, autour de l'axe X1 par rapport au bobinage statorique 12. Dans le cas où l'on prévoit que l'induit rotorique 32 est formé par un bobinage rotorique, il peut être nécessaire d'alimenter également l'induit rotorique 32 en énergie électrique pour que la rotation soit induite.

Plus généralement, une alimentation électrique du moteur entraîne une rotation du rotor 3 par rapport au stator 1 autour de l'axe X1.

Le moteur électrique est conçu pour que, dans une utilisation nominale du moteur, ou pour une utilisation du moteur à une vitesse de croisière, le rotor 3 soit mis en rotation à une vitesse w3 par rapport au stator 1 autour de l'axe X1, qui peut être qualifiée de « vitesse nominale ». La vitesse w3 est préférentiellement égale à environ 10000 tours par minute. Cette vitesse w3 est atteinte par alimentation du moteur en énergie électrique, en régime permanent, sous charge de traction du véhicule. Le moteur électrique peut être qualifié de moteur électrique de traction à haute vitesse. Plus généralement, on prévoit que la vitesse w3 est supérieure à 5000 tours par minute, et est de préférence supérieure à 9000 tours par minute.

Lorsque le rotor 3 est à la vitesse w3, l'arbre 31 et l'induit 32 sont également à cette vitesse w3.

On prévoit également que le stator 1 et le rotor 3 sont avantageusement conçus pour que le moteur présente une puissance entre 50kW et 2000kW, préférentiellement entre 1 00kW et 1000kW. De préférence, on prévoit une puissance supérieure à 500kW. Il s'agit de la puissance mécanique nominale développée par le moteur.

L'entraînement des roues du véhicule par le moteur pour le roulage est avantageusement effectué par l'intermédiaire de l'extrémité 34, qui est connectée auxdites roues par l'intermédiaire d'une transmission mécanique ou tout moyen approprié.

Comme illustré sur la figure 1, le ventilateur 5 forme une roue de ventilation, incluant par exemple des pales. Dans l'exemple illustré, on prévoit que le ventilateur 5 forme une roue de ventilation centrifuge.

Le ventilateur 5 est préférentiellement monté sur l'extrémité 33 de l'arbre 31 par l'intermédiaire d'un palier 37, de préférence un palier à éléments roulants. Par conséquent, le ventilateur 5 est rotatif par rapport au rotor 3 autour de l'axe X1, et donc, par rapport au stator 1. Axialement, le ventilateur 5 est préférentiellement disposé entre le flasque 13 et le boîtier 11, en particulier la paroi 17 du boîtier 11, comme montré sur la figure 1, de sorte que le ventilateur 5 est protégé de l'extérieur par le flasque 13.

Lorsqu'il est en rotation par rapport au stator 1, le ventilateur 5 met de l'air de ventilation en circulation selon les flèches 23. La rotation du ventilateur 5 entraîne donc une ventilation du moteur, en particulier du boîtier 11, aux fins de son refroidissement. Dans le présent exemple, l'air de ventilation est aspiré axialement par le ventilateur 5 au travers de l'ouverture 14, le ventilateur refoulant radialement (par rapport à l'extrémité 33 de l'arbre 31) l'air dans la partie du conduit 21 délimitée par la paroi 17 et le flasque 13. L'air de ventilation est ensuite guidé selon une direction axiale, le long du boîtier 11, par la partie du conduit 21 qui est délimitée par la paroi 19 et la jupe 15, jusqu'à l'ouverture 20.

Le rotor 3, lorsqu'il tourne à la vitesse w3, entraîne le ventilateur 5 en rotation autour de l'axe X1 par rapport au stator 1 à une vitesse de rotation w5, par l'intermédiaire du réducteur magnétique 7. Le moteur peut donc être qualifié de « autoventilé ».

Afin de réduire le bruit généré, dans le contexte d'un moteur à haute vitesse, le réducteur 7 est configuré pour que le ventilateur 5 soit mis en rotation à une vitesse w5 moins élevée que celle du rotor w3. Pour cela, on prévoit que le réducteur 7 transmet la rotation du rotor 3 au ventilateur 5 avec un rapport de réduction R=w5/w3, lequel est inférieur ou égal, en valeur absolue, à 0,85, voire à 0,5. Lorsque la valeur absolue du rapport de réduction R vaut 0,5, le ventilateur 5 tourne moitié moins vite que le rotor 3, selon le même sens de rotation ou en sens opposé, ce qui réduit considérablement le bruit généré, alors que la vitesse w3 est supérieure à 5000 tours par minute, et surtout si la vitesse w3 atteint 10 000 tours par minute.

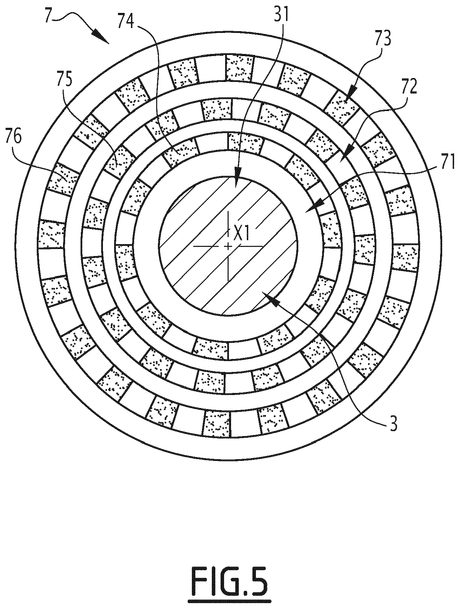

Comme montré sur les figures 1 et 5, le réducteur magnétique 7 comprend avantageusement une couronne intérieure 71, une couronne intermédiaire 72 et une couronne extérieure 73. Ces trois couronnes 71, 72 et 73 sont coaxiales avec l'axe X1. La couronne intérieure 71 est radialement entourée par la couronne intermédiaire 72 et par la couronne extérieure 73. La couronne intermédiaire 72 entoure radialement la couronne intérieure 71 et est radialement entourée par la couronne extérieure 73. La couronne extérieure 73 entoure radialement la couronne intérieure 71 et la couronne intermédiaire.

Pour le mode de réalisation de la figure 1, le réducteur 7 est agencé entre le boîtier 11, en particulier la paroi 17, et le ventilateur 5. Ainsi, le ventilateur 5 recouvre le réducteur 7 et le protège de l'extérieur, notamment de toute poussière métallique qui pourrait être charriée par le flux d'air de ventilation.

Plus généralement, on prévoit que le réducteur 7 et le ventilateur 5 sont avantageusement à l'extérieur du boîtier 11, ce qui facilite leur montage et leur entretien. Grâce à cet agencement particulier, il est également aisé de modifier un moteur préexistant en ajoutant le ventilateur 5 et le réducteur 7 à une extrémité d'arbre de rotor libre.

La couronne intérieure 71 est fixe par rapport au rotor 3, en étant ici montée en étant fixée sur l'arbre 31. En particulier, la couronne 71 est fixée à l'extrémité 33, de préférence entre les paliers 25 et 37. La vitesse de rotation de la couronne intérieure 71 est donc égale à la vitesse w3.

Comme mieux visible sur la figure 5, la couronne intérieure 71 comprend une pluralité d'aimants permanents 74 séparés, lesquels sont régulièrement répartis autour de l'axe principal X1. Le nombre d'aimants permanents 74 et leur disposition définit un nombre de paires de pôles magnétiques $p1$ de la couronne intérieure 71. Dans l'exemple illustré sur la figure 5, les aimants 74 sont en nombre pair et définissent une alternance de pôles positifs et négatifs autour de l'axe X1, de sorte que le nombre de paires de pôles $p1$ vaut cinq.

La couronne extérieure 73, comprend une pluralité d'aimants permanents 76 séparés, lesquels sont régulièrement répartis autour de l'axe principal X1. Le nombre d'aimants permanents 76 et leur disposition définit un nombre de paires de pôles $p3$ de la couronne extérieure 73. Dans l'exemple illustré sur la figure 5, les aimants 76 sont en nombre pair et définissent une alternance de pôles positifs et négatifs autour de l'axe X1, de sorte que le nombre de paires de pôles $p3$ vaut dix.

La couronne intermédiaire 72, qui peut être qualifiée de « modulatrice », qui comprend une pluralité de pièces ferromagnétiques 75 séparées, lesquelles sont régulièrement réparties autour de l'axe principal X1. Par ferromagnétique, on entend que les pièces 75 ont la capacité de s'aimanter sous l'effet d'un champ magnétique extérieur, ici fourni par les aimants permanents 74 et 76. La couronne intermédiaire 72 comporte un nombre de pièces ferromagnétiques $n2$. Sur la figure 5, le nombre de pièces ferromagnétiques 75 vaut quatorze.

Dans l'exemple de la figure 1, la couronne extérieure 73 constitue une couronne statorique du réducteur 7, dans la mesure où la couronne extérieure 73 est fixée au stator 1, en particulier au boîtier 11, ici à la paroi 17. La vitesse de rotation de la couronne statorique est nulle.

Dans l'exemple de la figure 1, la couronne intermédiaire 72 constitue une couronne entraînante, dans la mesure où la couronne intermédiaire 72 est fixée au ventilateur 5. La vitesse de rotation de la couronne entraînante est égale à la vitesse w5.

Pour obtenir les meilleures performances pour le réducteur 7, on construit le réducteur 7 de sorte que les grandeurs $p1$, $n2$ et $p3$ vérifient avantageusement la relation suivante :

[Math 1]

$$n2 = p1 + p3$$

On définit une grandeur caractéristique k du réducteur 7, avec la relation suivante :

[Math 2]

$$k = \frac{p1}{(p1 - n2)} = -\frac{p1}{p3}$$

Pour le cas de la figure 1, le rapport de réduction s'écrit :

[Math 3]

$$R = \frac{w5}{w3} = -\frac{k}{(1 - k)}$$

Pour le cas de la figure 1, on choisit donc les nombres n2, p1 et p3 de sorte à adapter la valeur de k, de façon à obtenir le rapport de réduction R souhaité.

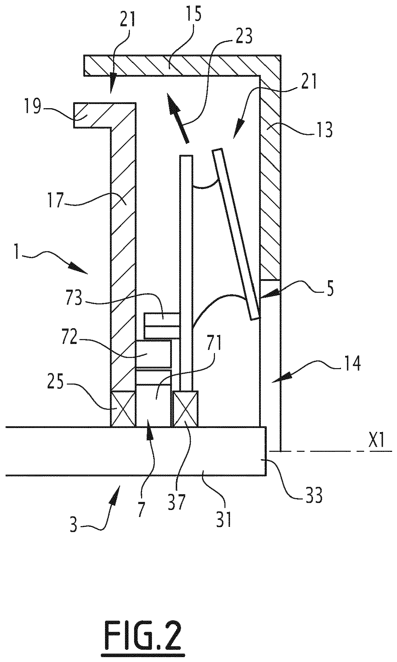

Pour le deuxième mode de réalisation de la figure 2, toutes les caractéristiques du moteur sont identiques à celles décrites ci-avant pour la figure 1 et sont désignées par les mêmes signes de référence. Le moteur de la figure 2 diffère du moteur de la figure 1 en ce que la couronne intermédiaire 72 est fixée au stator 1, en particulier au boîtier 11, ici à la paroi 17, de sorte que la couronne intermédiaire 72 constitue la couronne statorique, et en ce que la couronne extérieure 73 est fixée au ventilateur 5 et constitue ainsi la couronne entraînante.

Dans ce cas, le rapport de réduction s'écrit :

[Math 4]

$$R = \frac{w5}{w3} = -k$$

Pour le cas de la figure 2, la relation entre le rapport de réduction et la grandeur k étant modifiée par rapport à la figure 1, on modifie éventuellement les grandeurs n2, p1 et p3 afin d'obtenir le rapport de réduction R souhaité, visant à obtenir que la vitesse w5 soit inférieure à la vitesse w3.

Ainsi, en disposant d'un même réducteur 7, dont les grandeurs p1, n2 et p3 sont prédéterminées, on peut modifier le rapport de réduction R par inversion des couronnes 72 et 73, c'est-à-dire en choisissant laquelle, parmi les couronnes 72 et 73, est respectivement la couronne entraînante ou la couronne statorique.

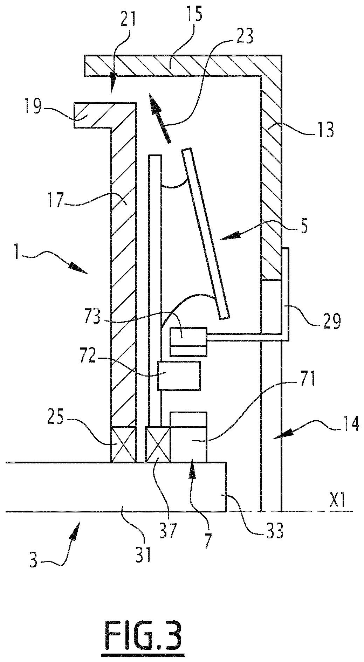

Pour le troisième mode de réalisation de la figure 3, toutes les caractéristiques du moteur sont identiques à celles décrites ci-avant pour la figure 1, et sont désignées par les mêmes signes de référence. Le moteur de la figure 3 diffère du moteur de la figure 1 en ce que le réducteur magnétique 7 est axialement disposé entre le ventilateur 5 et le flasque 13. La couronne extérieure 73, qui constitue la couronne statorique, est fixée au stator 1 par l'intermédiaire du flasque 13. Par exemple, on prévoit que la couronne statorique est fixée au flasque 13 par l'intermédiaire d'une ou plusieurs patte(s) de fixation 29. La couronne intérieure 71 est fixée à l'extrémité 33 de l'arbre, contre le palier 37 ou à proximité, du côté extérieur du ventilateur 5. Cet agencement du réducteur magnétique 7 permet de faciliter son entretien et son installation, au détriment de sa protection par rapport à l'extérieur.

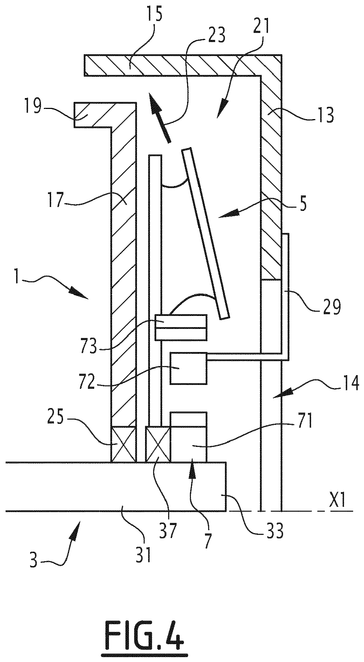

Pour le quatrième mode de réalisation de la figure 4, toutes les caractéristiques du moteur sont identiques à celles décrites ci-avant pour la figure 3, et sont désignées par les mêmes signes de référence, hormis en ce que la couronne intermédiaire 72 constitue la couronne statorique et est fixée au stator 1 par l'intermédiaire du flasque 13, en particulier via la patte 29. La couronne entraînante, constituée par la couronne extérieure 73, est donc fixée au ventilateur 5.

Pour le cas de la figure 4, la relation entre le rapport de réduction et la grandeur k étant modifiée par rapport à la figure 3, on modifie éventuellement les grandeurs n2, p1 et p3 afin d'obtenir le rapport de réduction R souhaité, visant à obtenir que la vitesse w5 soit inférieure à la vitesse w3.

Comme illustré aux figures 1 à 4, l'invention s'applique à un moteur autoventilé fermé, notamment dans la mesure où l'air de ventilation 23 est mis en circulation le long du boîtier 11 renfermant le bobinage statorique 12 et étant traversé par le rotor 3, et non pas à l'intérieur du boîtier 11. En variante, le moteur est un moteur ouvert, où l'air de circulation traverse le boîtier 11 et où, de préférence, le ventilateur 5 est disposé à l'intérieur du boîtier 11. Dans cette variante, le flasque 13 et la jupe 15 ne sont pas nécessaires.

En variante, on prévoit que le stator comprend l'induit, alors que le rotor comprend l'inducteur, l'induit et l'inducteur étant préférentiellement contenus à l'intérieur du boîtier 11.

Toute caractéristique décrite ci-avant pour l'un des modes de réalisation ou l'une des variantes peut être mise en oeuvre dans les autres modes de réalisation ou variantes décrits ci-avant, pour autant que cela soit techniquement possible, dans la portée définie par les revendications.

**Revendications**

1. Moteur électrique de traction d'un véhicule, le moteur comprenant :

• un stator (1) ;
• un rotor (3), qui est conçu pour être mis en rotation à une vitesse w3 supérieure à 5000 tours par minute, par rapport au stator (1), autour d'un axe principal (X1) du moteur, sous l'effet d'une alimentation du moteur en énergie électrique ;
• un ventilateur (5), qui est conçu pour être mis en rotation par rapport au stator (1), autour de l'axe principal (X1), à une vitesse w5, pour ventiler le moteur ;
• un réducteur magnétique (7), par l'intermédiaire duquel le rotor (3) entraîne le ventilateur (5) en rotation, le réducteur magnétique (7) étant conçu pour transmettre la rotation du rotor (3) au ventilateur (5) avec un rapport de réduction [Math 5] $R$ = w5/w3 ;

dans lequel :

• une valeur absolue du rapport de réduction R est inférieure ou égale à 0,85, de préférence égale à environ 0,5 ;
• le réducteur magnétique (7) comprend :

♦ une couronne intérieure (71), qui est fixe par rapport au rotor (3), qui comprend une pluralité d'aimants permanents (74) séparés, lesquels sont répartis autour de l'axe principal (X1) et constituent un nombre de paires de pôles p1,
♦ une couronne intermédiaire (72), qui comprend un nombre n2 de pièces ferromagnétiques (75) séparées, lesquelles sont réparties autour de l'axe principal (X1), et
♦ une couronne extérieure (73), qui comprend une pluralité d'aimants permanents (76) séparés, répartis autour de l'axe principal (X1), lesquels constituent un nombre de paires de pôles p3 ;

• une couronne statorique, choisie parmi la couronne intermédiaire (72) et la couronne extérieure (73), est fixe par rapport au stator (1) ;
• une couronne entraînante, choisie parmi la couronne intermédiaire (72) et la couronne extérieure (73), tout en étant distincte de la couronne statorique, est fixe par rapport au ventilateur (5) ;
• le stator (1) comprend :

♦ un boîtier (11), qui est traversé par le rotor (3) le long de l'axe principal (X1) et qui renferme un inducteur (12) et un induit (32) appartenant au moteur, et
♦ un flasque (13), attaché au boîtier (11), qui ménage une ouverture de circulation d'air (14), laquelle est traversée par l'axe principal (X1) ; et

• le ventilateur (5) est disposé à l'extérieur du boîtier (11), entre ledit boîtier (11) et le flasque (13), le long de l'axe principal (X1), et est configuré pour mettre de l'air de ventilation en circulation au travers de l'ouverture de circulation d'air (14) pour ventiler le moteur ;
• le réducteur magnétique (7) est disposé entre le ventilateur (5) et le flasque (13), le long de l'axe principal (X1) ; et
• la couronne statorique est fixe par rapport au stator (1) en étant attachée au stator (1) par l'intermédiaire du flasque (13).

2. Moteur selon la revendication 1, dans lequel le réducteur magnétique (7) est construit de sorte que les grandeurs p1, n2 et p3 vérifient la relation suivante :

$$[\text{Math 1}] \quad n2 = p1 + p3.$$

3. Moteur selon l'une quelconque des revendications 1 ou 2, dans lequel :

• la couronne extérieure (73) est la couronne entraînante, qui est fixe par rapport au ventilateur (5) ;
• la couronne intermédiaire (72) est la couronne statorique, qui est fixe par rapport au stator (1) ; et
• le rapport de réduction s'écrit

$$[Math \quad 4] \; R = \frac{w5}{w3} = -k$$

avec

$$[Math \; 2] \; k = \frac{p1}{(p1-n2)} = -\frac{p1}{p3}$$

4. Moteur selon l'une quelconque des revendications 1 ou 2, dans lequel :

• la couronne extérieure (73) est la couronne statorique, qui est fixe par rapport au stator (1) ;
• la couronne intermédiaire (72) est la couronne entraînante, qui est fixe par rapport au ventilateur (5) ; et
• le rapport de réduction s'écrit

$$[Math \quad 3] \quad R = \frac{w5}{w3} = -\frac{k}{(1-k)}$$

avec

$$[Math \; 2] \; k = \frac{p1}{(p1-n2)} = -\frac{p1}{p3}$$

5. Moteur selon l'une quelconque des revendications précédentes, dans lequel le rotor (3) comprend un arbre rotorique (31), qui est coaxial avec l'axe principal (X1), qui est en rotation à la vitesse w3 lorsque le rotor (3) tourne à la vitesse w3, et qui supporte le ventilateur (5) par l'intermédiaire d'un palier à roulements (37), le ventilateur (5) étant rotatif par rapport au rotor (3) autour de l'axe principal (X1).

6. Véhicule ferroviaire comprenant un moteur selon l'une quelconque des revendications précédentes, le moteur assurant la traction du véhicule ferroviaire.

**Patentansprüche**

1. Elektromotor für den Antrieb eines Fahrzeugs, wobei der Motor Folgendes umfasst:

• einen Stator (1);
• einen Rotor (3), der dazu ausgelegt ist, mit einer Geschwindigkeit w3 von mehr als 5000 Umdrehungen pro Minute in Bezug auf den Stator (1) unter der Wirkung einer Versorgung des Motors mit elektrischer Energie um eine Hauptachse (X1) des Motors zu rotieren;
• einen Lüfter (5), der dazu ausgelegt ist, relativ zum Stator (1) um die Hauptachse (X1) mit einer Geschwindigkeit w5 gedreht zu werden, um den Motor zu belüften;
• ein magnetisches Untersetzungsgetriebe (7), über das der Rotor (3) den Lüfter (5) in Drehung versetzt, wobei das magnetische Untersetzungsgetriebe (7) so ausgelegt ist, dass es überträgt die Drehung des Rotors (3) auf den Lüfter (5) mit einem Untersetzungsverhältnis [Math 5] R = w5/w3 ;

wobei:

• ein absoluter Wert des Untersetzungsverhältnisses R, der kleiner oder gleich 0,85, vorzugsweise etwa 0,5, beträgt;
• das magnetische Untersetzungsgetriebe (7) umfasst:

♦ einen Innenring (71), der in Bezug auf den Rotor (3) feststeht ist, der eine Vielzahl von separaten Permanentmagneten (74) umfasst, die um die Hauptachse (X1) verteilt sind und eine Anzahl von Polpaaren p1 bilden,

♦ einen Zwischenring (72), der eine Anzahl n2 von separaten ferromagnetischen Teilen (75) umfasst, die um die Hauptachse (X1) herum verteilt sind, und
♦ einen Außenring (73), der eine Vielzahl von separaten Permanentmagneten (76) umfasst, die um die Hauptachse (X1) herum verteilt sind und die eine Anzahl von Polpaaren p3 bilden;

• ein Stator Kranz, der aus dem Zwischenring (72) und dem Außenring (73) ausgewählt ist, in Bezug auf den Stator (1) feststehend ist;
• ein Antriebsring, der aus dem Zwischenring (72) und dem Außenring (73) ausgewählt ist, während er von dem Stator Kranz getrennt ist, in Bezug auf den Lüfter (5) feststehend ist;
• der Stator (1) umfasst:

♦ ein Gehäuse (11), durch das der Rotor (3) entlang der Hauptachse (X1) verläuft und das einen zum Motor gehörenden Induktor (12) und Anker (32) umschließt, und
♦ einen Flansch (13), der am Gehäuse (11) befestigt ist und eine Luftströmungsöffnung (14) bildet, die von der Hauptachse (X1) durchquert wird; und

• der Lüfter (5) außerhalb des Gehäuses (11) zwischen dem Gehäuse (11) und dem Flansch (13) entlang der Hauptachse (X1) angeordnet ist und so konfiguriert ist, Belüftungsluft durch die Luftströmungsöffnung (14) zirkulieren zu lassen, um den Motor zu belüften;
• das magnetische Untersetzungsgetriebe (7) zwischen dem Lüfter (5) und dem Flansch (13) entlang der Hauptachse (X1) angeordnet ist; und
• der Stator Kranz in Bezug auf den Stator (1) fest ist, indem er über den Flansch (13) am Stator (1) befestigt ist.

2. Motor nach Anspruch 1, wobei das magnetische Untersetzungsgetriebe (7) so konstruiert ist, dass die Größen p1, n2 und p3 die folgende Beziehung erfüllen:

$$[\text{Math 1}] \quad n2 = p1 + p3.$$

3. Motor nach einem der Ansprüche 1 oder 2, wobei:

• der Außenring (73) der Antriebsring ist, der in Bezug auf den Lüfter (5) feststeht ist;
• der Zwischenring (72) der Stator Kranz ist, der in Bezug auf den Stator (1) feststeht ist;
• ist; und
• das Untersetzungsverhältnis schreibt sich.

$$[\text{Math 4}] \quad R = \frac{w5}{w3} = -k$$

mit

$$[\text{Math 2}] \quad k = \frac{p1}{(p1-n2)} = -\frac{p1}{p3}$$

4. Motor nach einem der Ansprüche 1 oder 2, wobei:

• der Außenring (73) der Stator Kranz ist, der in Bezug auf den Stator (1) feststeht ist;
• ist;
• der Zwischenring (72) der Antriebsring ist, der in Bezug auf den Lüfter (5) feststeht ist; und
• das Untersetzungsverhältnis schreibt sich

$$[\text{Math 3}] \quad R = \frac{w5}{w3} = -\frac{k}{(1-k)}$$

mit

$$[Math\ 2]\ k = \frac{p1}{(p1-n2)} = -\frac{p1}{p3}$$

5. Motor nach einem der vorhergehenden Ansprüche, wobei der Rotor (3) eine Rotorwelle (31) umfasst, die koaxial zur Hauptachse (X1) ist, die sich mit der Geschwindigkeit w3 dreht, wenn der Rotor (3) sich mit der Geschwindigkeit w3 dreht, und die den Lüfter (5) über ein Wälzlager (37) trägt, wobei der Lüfter (5) in Bezug auf den Rotor (3) um die Hauptachse (X1) drehbar ist.

6. Schienenfahrzeug mit einem Motor nach einem der vorhergehenden Ansprüche, wobei der Motor für den Antrieb des Schienenfahrzeugs sorgt.

**Claims**

1. An electric traction motor for a vehicle, the motor comprising:

   • a stator (1);
   • a rotor (3), which is designed to be rotated at a speed w3 greater than 5000 revolutions per minute, relative to the stator (1), around a main axis (X1) of the motor, under the effect of an electrical power supply to the motor;
   • a fan (5), which is designed to be rotated relative to the stator (1), around the main axis (X1), at a speed w5, to ventilate the motor;
   • a magnetic gearbox (7), via which the rotor (3) drives the fan (5) in rotation, the magnetic gearbox (7) being designed to transmit the rotation of the rotor (3) to the fan (5) with a reduction ratio [Math 5] $R$ = w5/w3 ;

   in which

   • an absolute value of the reduction ratio R is less than or equal to 0.85, preferably equal to about 0.5;
   • the magnetic gearbox (7) comprises-:

      ♦ an inner ring (71), which is fixed relative to the rotor (3), comprising a multitude of separate permanent magnets (74), which are distributed around the main axis (X1) and constitute a number of pole pairs p1,
      ♦ an intermediate ring (72) comprising a number n2 of separate ferromagnetic parts (75) distributed around the main axis (X1), and
      ♦ an outer ring (73), which comprises a multitude of separate permanent magnets (76), distributed around the main axis (X1), which constitute several pole pairs p3-;

   • a stator ring, chosen from the intermediate ring (72) and the outer ring (73), is fixed relative to the stator (1);
   • a driving ring, chosen from the intermediate ring (72) and the outer ring (73), while being distinct from the stator ring, is fixed with respect to the fan (5);
   • the stator (1) comprises:

      ♦ a housing (11) through which the rotor (3) passes along the main axis (X1) and which contains a field winding (12) and an armature (32) belonging to the motor, and
      ♦ a flange (13), attached to the housing (11), which provides an air circulation opening (14) through which the main axis (X1) passes; and

   • the fan (5) is placed outside the casing (11), between said casing (11) and the flange (13), along the main axis (X1), and is configured to circulate ventilation air through the air circulation opening (14) to ventilate the motor;
   • the magnetic gearbox (7) is arranged between the fan (5) and the flange (13) along the main axis (X1); and
   • the stator ring gear is fixed relative to the stator (1) and is attached to the stator (1) by means of the flange (13).

2. A motor according to claim 1, in which the magnetic gearbox (7) is constructed so that the values p1, n2 and p3 satisfy the following relationship-:

$$[Math\ 1]\ n2 = p1 + p3.$$

3. A device according to any one of claims 1 or 2, wherein:

- the outer ring (73) is the driving ring, which is fixed relative to the fan (5);
- the intermediate ring (72) is the stator ring, which is fixed relative to the stator (1); and
- the reduction ratio is written as

$$[\text{Math 4}] \quad R = \frac{w5}{w3} = -k$$

with

$$[\text{Math2}] \quad k = \frac{p1}{p1-n2} = -\frac{p1}{p3}$$

4. A device according to any one of claims 1 or 2, wherein:

- the outer ring (73) is the stator ring, which is fixed relative to the stator(1)-;
- the intermediate ring (72) is the driving ring, which is fixed relative to the fan (5); and
- the reduction ratio is written as

$$[\text{Math 3}] \quad R = \frac{w5}{w3} = -\frac{k}{(1-k)}$$

with

$$[\text{Math2}] \quad k = \frac{p1}{p1-n2} = -\frac{p1}{p3}$$

5. A motor according to any one of the preceding claims, wherein the rotor (3) comprises a rotor shaft (31), which is coaxial with the main axis (X1), which rotates at speed w3 when the rotor (3) is rotating at speed w3, and which supports the fan (5) via a roller bearing (37), the fan (5) being rotatable relative to the rotor (3) about the main axis (X1).

6. A rail vehicle comprising a motor according to any one of the preceding claims, the motor providing traction for the rail vehicle.

## FIG.1

**FIG.2**

## FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2013211949 A
- US 6661144 B1
- CN 109415070 A